# EUROPEAN PATENT APPLICATION

(11) **EP 2 490 198 A1**
(43) Date of publication of application: **22.08.2012**
(21) Application number: 09850013.5
(22) Date of filing: 02.10.2009
(51) Int. Cl.: G08G 1/14

(54) **PARKING ASSISTANCE DEVICE**

(71) Applicant: Mitsubishi Electric Corporation, Tokyo 100-8310 (JP)
(72) Inventor: TANAKA, Shoji, Tokyo 100-8310 (JP); SADAHIRO, Takashi, Tokyo 100-8310 (JP); SEMPUKU, Tsuyoshi, Tokyo 100-8310 (JP); IEDA, Kuniyo, Tokyo 100-8310 (JP); MIYAZAKI, Hideto, Tokyo 100-8310 (JP); KITANO, Toyoaki, Tokyo 100-8310 (JP)
(74) Representative: Pfenning, Meinig & Partner GbR
(86) International application number: PCT/JP2009/005115
(87) International publication number: WO 2011/039822

(57) **Abstract**

A parking support apparatus includes: a vehicle position locating control unit for locating a present position; a parking support database in which a guideline to be displayed at parking is registered for each parking space; cameras for shooting surroundings; a parking support screen generating unit for acquiring, when parking in a parking space placed at the position located by the vehicle position locating control unit, the guideline corresponding to the parking space from the parking support database, and for generating a parking support screen by superposing the guideline upon an image or images taken with the cameras; and a display unit for displaying the parking support screen created by the parking support screen generating unit. Accordingly, it can offer a parking support apparatus capable of displaying the optimum parking support image corresponding to a parking space and improving convenience.

## Description

### TECHNICAL FIELD

The present invention relates to a parking support apparatus which is applied to a navigation system, for example, for supporting parking in a parking lot.

### BACKGROUND ART

Recently, to support parking, a parking support apparatus has spread which displays on a screen a parking support image created by superposing an image acquired by shooting a surrounding area of a vehicle with a camera upon a prescribed guide image. As a technique relevant to such a parking support apparatus, Patent Document 1 discloses a vehicle surrounding area monitoring device that achieves switching between display and non-display of a driving help line on a display with a simple configuration. The vehicle surrounding area monitoring device has a front camera for shooting a front area at the front of the body, side cameras for shooting side areas at sides of the body, and a rearview camera for shooting a rear area at the back of the body, respectively. In addition, a front image request switch, side image request switch and back image request switch are provided at a location where a driver can operate. In response to the operation of one of the image request switches, an image picked up with the corresponding camera is displayed on a display and a guideline is displayed simultaneously with the image. Then, when the duration for which the operation of the image request switch is effective reaches a prescribed time period, the display of the guideline is inhibited and suspended.

Besides, Patent Document 2 discloses a guidance support apparatus for ensuring safe automatic guidance and for reducing inconvenience for a driver to perform driving operation as much as possible when execution of the automatic guidance is inhibited. The guidance support apparatus corrects a target parking position on a real road in accordance with vehicle height and pitch angle detected from the output signal of a vehicle height sensor, and carries out position correction of an imaginary line indicated by various types of guidelines superposed and displayed on the image picked up with the rearview camera. Then, it executes automatic steering control for moving the vehicle along the guidance course to the target parking position and performs guide monitor control for displaying on the real image the guideline shown on the touch display.

Furthermore, Patent Document 3 discloses a parking support apparatus capable of displaying a screen that is easy for a driver to understand. The parking support apparatus has, in the control unit of a parking support system mounted in a vehicle, an image processor for acquiring shooting data from cameras mounted on the vehicle and outputs a composite image using the shooting data to a display. The image processor makes a down shot of a vehicle image from a point of view set at diagonally above in the moving direction of the vehicle, and outputs it to the position corresponding to the present position of the vehicle.

### Prior Art Document

### Patent Document

Patent Document 1: Japanese Patent Laid-Open No. 2003-163925.
Patent Document 2: Japanese Patent Laid-Open No. 2005-75015.
Patent Document 3: Japanese Patent Laid-Open No. 2008-137535.

As for a mode of parking in a parking lot, there are roughly two types: parallel parking (reversing/moving forward); and roadside parking, and a parking support image to be displayed differs depending on the types. Accordingly, at parking, a user has to select a parking support image manually in accordance with a parking mode, which offers a problem of being troublesome.

In addition, even if the parking mode is the same, since the area of a parking space, the presence or absence of an obstacle or the presence or absence of a target (such as a parking frame) differs depending on a parking space, there are some cases where a single type of guide image is not enough for the parking. In view of this, a parking support apparatus has been developed which has a function of enabling a user to adjust a guide image manually. However, adjusting it manually every time of parking is inconvenient and impractical. In addition,since requirements a driver makes for the parking support image differ, when a plurality of persons use a vehicle in common, there are some cases where a parking support image of individual personal likings may not be displayed.

The present invention is implemented to solve the foregoing problems. Therefore it is an object of the present invention to provide a parking support apparatus capable of displaying an optimum parking support image for a parking space to improve its convenience.

### DISCLOSURE OF THE INVENTION

A parking support apparatus in accordance with the present invention comprises: a vehicle position locating control unit for locating a present position; a parking support database in which a guideline to be displayed at parking is registered for each parking space; cameras for shooting surroundings; a parking support screen generating unit for acquiring, when parking in a parking space placed at the position located by the vehicle position locating control unit, the guideline corresponding to the parking space from the parking support database, and for generating a parking support screen by superposing the guideline upon an image or images taken with the cameras; and a display unit for displaying the parking support screen created by the parking support screen generating unit.

According to the parking support apparatus in accordance with the present invention, since it is configured in such a manner that it registers for each parking space a guideline to be displayed at parking in the parking support database, acquires the guideline corresponding to the parking space from the parking support database when parking in a parking space, and generates and displays a parking support screen by superposing the guideline on an image or images taken with the front camera 15, side cameras 16 and/or rearview camera 17, it can improve the convenience by displaying the optimum parking support image corresponding to the parking space.

### BRIEF DESCRIPTION OF THE DRAWINGS

FIG. 1 is a block diagram showing a configuration of a navigation system to which a parking support apparatus of an embodiment 1 in accordance with the present invention is applied;
FIG. 2 is a flowchart showing the operation of the parking support apparatus of the embodiment 1 in accordance with the present invention, centering on parking support processing;
FIG. 3 is a flowchart (part 1) showing details of parking support start decision processing executed in the parking support processing of the parking support apparatus of the embodiment 1 in accordance with the present invention;
FIG. 4 is a flowchart (part 2) showing details of the parking support start decision processing executed in the parking support processing of the parking support apparatus of the embodiment 1 in accordance with the present invention;
FIG. 5 is a flowchart showing details of parking support end decision processing executed in the parking support processing of the parking support apparatus of the embodiment 1 in accordance with the present invention;
FIG. 6 is a diagram showing an image of making parallel parking (back) in a parking lot which is set in a registered place, using the parking support apparatus of the embodiment 1 in accordance with the present invention;
FIG. 7 is a table showing set contents of parking support operation when making the parallel parking (back) in the parking lot which is set in a registered place, using the parking support apparatus of the embodiment 1 in accordance with the present invention;
FIG. 8 is a diagram showing an example of image display when making the parallel parking (back) in the parking lot which is set in a registered place, using the parking support apparatus of the embodiment 1 in accordance with the present invention;
FIG. 9 is a diagram showing an image of making parallel parking (forward) in a parking lot which is set in a registered place, using the parking support apparatus of the embodiment 1 in accordance with the present invention;
FIG. 10 is a table showing set contents of parking support operation when making the parallel parking (forward) in the parking lot which is set in a registered place, using the parking support apparatus of the embodiment 1 in accordance with the present invention;
FIG. 11 is a diagram showing an image of making roadside parking (forward) in a parking lot which is set in a registered place, using the parking support apparatus of the embodiment 1 in accordance with the present invention;
FIG. 12 is a table showing set contents of parking support operation when making the roadside parking (forward) in the parking lot which is set in a registered place, using the parking support apparatus of the embodiment 1 in accordance with the present invention;
FIG. 13 is a diagram showing an image of making roadside parking (back) in a parking lot which is set in a registered place, using the parking support apparatus of the embodiment 1 in accordance with the present invention; and
FIG. 14 is a table showing set contents of parking support operation when making the roadside parking (back) in the parking lot which is set in a registered place, using the parking support apparatus of the embodiment 1 in accordance with the present invention.

### EMBODIMENTS FOR CARRYING OUT THE INVENTION

The best mode for carrying out the invention will now be described with reference to the accompanying drawings.

### EMBODIMENT 1

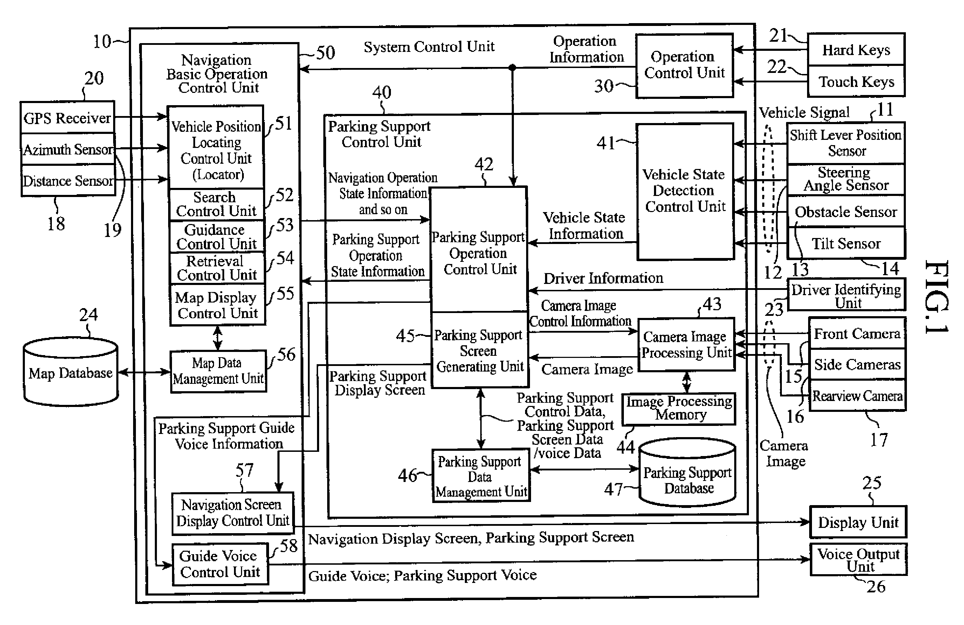

FIG. 1 is a block diagram showing a configuration of a navigation system to which a parking support apparatus of an embodiment 1 in accordance with the present invention is applied.

The navigation system comprises a system control unit 10 and components connected to the system control unit 10, that is, a shift lever position sensor 11, a steering angle sensor 12, an obstacle sensor 13, a tilt sensor 14, a front camera 15, side cameras 16, a rearview camera 17, a distance sensor 18, an azimuth sensor 19, a GPS (Global Positioning System) receiver 20, hard keys 21, touch keys 22, a driver identifying unit 23, a map database 24, a display unit 25 and a voice output unit 26. As for the system control unit 10, it will be described in detail later. Incidentally, in the following description, in the navigation system, components for carrying out navigation functions are sometimes referred to as a "navigation system" for convenience' sake.

The shift lever position sensor 11 detects a position (referred to as a "shift lever position") at which the shift lever of a vehicle is set, and sends it to the system control unit 10 as a shift lever position signal. The steering angle sensor 12 detects the steering angle of the steering wheel of the vehicle, and sends it to the system control unit 10 as a steering angle signal. The obstacle sensor 13 detects an obstacle in a vehicle surrounding area, and sends it to the system control unit 10 as an obstacle signal. The tilt sensor 14 detects the inclination of the vehicle. Since shooting ranges of the cameras (front camera 15, side cameras 16 and rearview camera 17) vary depending on the degree of inclination of the vehicle, the tilt sensor 14 is used to correct them. The inclination detected with the tilt sensor 14 is sent to the system control unit 10 as an inclination signal.

The front camera 15 shoots ahead of the vehicle. An image acquired by shooting with the front camera 15 is sent to the system control unit 10 as a front camera image signal. The side cameras 16, which include a right side camera and a left side camera, are mounted on the side mirrors, for example, and shoot the sides of the vehicle. Images acquired by shooting with the side cameras 16 are sent to the system control unit 10 as side camera image signals. The rearview camera 17 shoots the rear of the vehicle. An image acquired by shooting with the rearview camera 17 is sent to the system control unit 10 as a rearview camera image signal.

The distance sensor 18 detects the distance covered by the vehicle. Usually, a vehicle speed sensor is used as the distance sensor 18. The distance covered detected with the distance sensor 18 is sent to the system control unit 10 as a distance signal. The azimuth sensor 19 detects the azimuth of the vehicle. A gyrocompass, which can detect the inclination besides the azimuth, is used as the azimuth sensor 19. The azimuth detected with the azimuth sensor 19 is sent to the system control unit 10 as an azimuth signal. The GPS receiver 20 receives signals from GPS satellites, creates information about latitude, longitude, altitude and date and time, and sends it to the system control unit 10 as a GPS signal.

The hard keys 21 are switches for user operation. A signal generated by operating one of the hard keys 21 is sent to the system control unit 10 as an operation signal. The touch keys 22 are switches for user operation. A signal generated by operating one of the touch keys 22 is sent to the system control unit 10 as an operation signal.

The driver identifying unit 23 is used for inputting information for identifying a driver. The information input from the driver identifying unit 23 is sent to the system control unit 10 as driver information. The map database 24 stores map data. The map database 24 is accessed by the system control unit 10.

The display unit 25, which is composed of a liquid crystal display, displays a map, a message and other various pieces of information in response to the display data sent from the system control unit 10. The voice output unit 26, which is composed of a speaker, for example, outputs various messages in voice in response to the voice data sent from the system control unit 10.

Next, details of the system control unit 10 will be described. The system control unit 10 comprises an operation control unit 30, a parking support control unit 40 and a navigation basic operation control unit 50. The operation control unit 30 interprets the operation signals sent from the hard keys 21 and touch keys 22 and sends to the parking support control unit 40 and navigation basic operation control unit 50 as operation information representing an operation content. The parking support control unit 40, whose details will be described later, carries out control for performing parking support. The navigation basic operation control unit 50, whose details will be described later, carries out control for implementing the navigation functions.

Next, details of the parking support control unit 40 will be described. The parking support control unit 40 comprises a vehicle state detection control unit 41, a parking support operation control unit 42, a camera image processing unit 43, an image processingmemory 44, a parking support screen generating unit 45, a parking support data management unit 46 and a parking support database 47.

The vehicle state detection control unit 41 decides the state of the vehicle from the signals sent from the vehicle. More specifically, it decides it from the shift lever position signal sent from the shift lever position sensor 11 of the vehicle, the steering angle signal sent from the steering angle sensor 12, the obstacle signal sent from the obstacle sensor 13, and the inclination signal sent from the tilt sensor 14, and sends it to the parking support operation control unit 42 as vehicle state information.

The parking support operation control unit 42 controls the parking support operation in its entirety in response to the navigation operation state information sent from the navigation basic operation control unit 50, the vehicle state information sent from the vehicle state detection control unit 41 such as speed information, traveling azimuth information, position information, date information, registered place setting information and destination setting information, and the operation information sent from the operation control unit 30. The camera image control information generated by the parking support operation control unit 42 is sent to the camera image processing unit 43, and the parking support operation state information and parking support guide voice information are sent to the navigation basic operation control unit 50.

The camera image processing unit 43 generates, in response to the camera image control information sent from the parking support operation control unit 42, the camera image from at least one of the front camera image signal from the front camera 15, the side camera image signals from the side cameras 16 and the rearview camera image signal from the rearview camera 17, and processes the camera image it generates using the image processing memory 44 as the workingmemory. Here, the camera image processing includes enlargement, reduction, cutting, composition or correction (distortion correction, emphasis, edge extraction or interpolation) of a camera image. The camera image processed by the camera image processing unit 43 is sent to the parking support screen generating unit 45. The image processing memory 44 is used for temporarily storing camera images in the camera image processing by the camera image processing unit 43.

Under the control of the parking support operation control unit 42, the parking support screen generating unit 45 generates a parking support display screen by superposing additional information (such as a guideline or telop) upon the camera image sent from the camera image processing unit 43. The parking support display screen generated by the parking support screen generating unit 45 is sent to the navigation basic operation control unit 50.

The parking support data management unit 46 manages the parking support database 47. The parking support database 47 stores the parking support control data and parking support screen data used for the parking support processing. The foregoing parking support screen generating unit 45 generates the additional information using the parking support control data and parking support screen data obtained from the parking support database 47 via the parking support data management unit 46.

Next, details of the navigation basic operation control unit 50 will be described. The navigation basic operation control unit 50 comprises a vehicle position locating control unit (locator) 51, a search control unit 52, a guidance control unit 53, a retrieval control unit 54, a map display control unit 55, a map data management unit 56, a navigation screen display control unit 57 and a guide voice control unit 58.

The vehicle position locating control unit 51 identifies the vehicle position from the distance signal from the distance sensor 18, the azimuth signal from the azimuth sensor 19 and the GPS signal from the GPS receiver 20. The vehicle position identified by vehicle position locating control unit 51 is sent as the position information not only to the search control unit 52, guidance control unit 53, retrieval control unit 54 and map display control unit 55, but also to the parking support control unit 40.

The search control unit 52 searches for a route from the vehicle position indicated by the position information sent from the vehicle position locating control unit 51 to a destination sent from the operation control unit 30 as the operation information in response to the operation of the hard keys 21 or touch keys 22 according to the map data acquired from the parking support database 47 via the parking support data management unit 46. The route searched by the search control unit 52 is sent to the guidance information unit 53 as route information.

The guidance control unit 53 executes processing of guiding the vehicle to the destination along the route given by the route information sent from the search control unit 52. The retrieval control unit 54 executes processing of retrieving facilities in the surrounding area of the vehicle position indicated by the position information sent from vehicle position locating control unit 51.

The map display control unit 55 generates map data for display. The map data management unit 56 manages the map data stored in the map database 24. The map display control unit 55 generates the map data for display using the map data acquired from the map database 24 via the map data management unit 56.

The navigation screen display control unit 57, as part of the navigation functions, generates the navigation display screen and sends to the display unit 25, and generates the parking support screen from the parking support display screen sent from the parking support screen generating unit 45 of the parking support control unit 40 and sends to the display unit 25. This causes the display unit 25 to display the navigation display screen or parking support screen.

The guide voice control unit 58, as a part of the navigation functions, generates the guide voice and sends it to the voice output unit 26, and generates the parking support voice from the parking support guide voice information sent from the parking support operation control unit 42 of the parking support control unit 40 and sends it to the voice output unit 26. This causes the voice output unit 26 to output the guide voice or parking support voice.

Next, the operation of the parking support apparatus of the embodiment 1 in accordance with the present invention with the foregoing configuration will be described. Generally, as a case of parking, there is a case of parking in a registered place (parking lot setting is present) and a case of parking in a space other than a registered place (parking lot setting is absent). The present invention relates to a technique of supporting parking in a registered place, and since a technique of parking in a space other than a registered place is well-known (see Japanese Patent Laid-Open No. 2006-137274, for example), description thereof will be omitted.

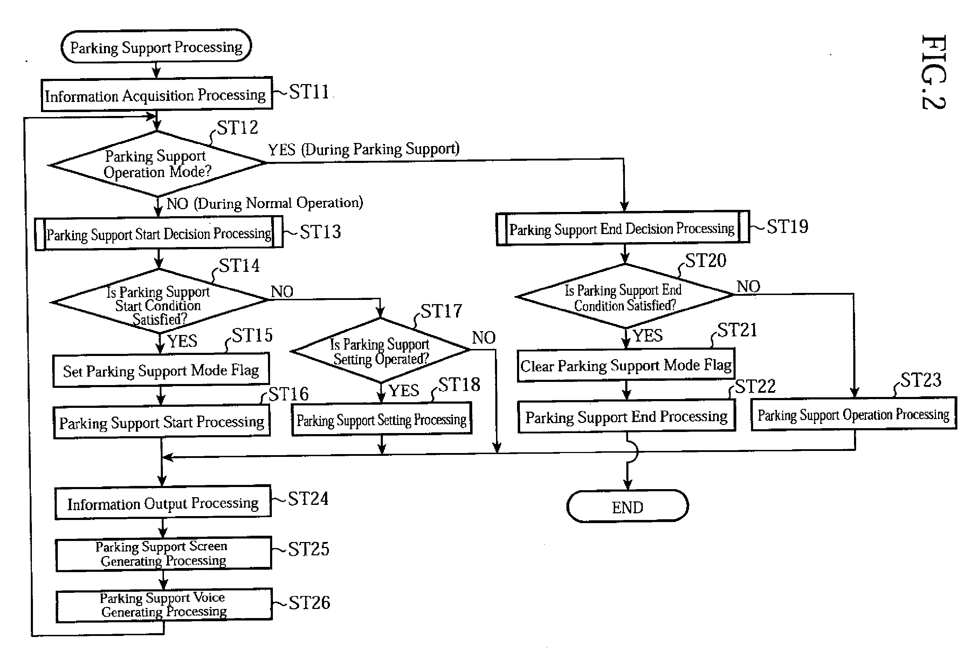

First, an outline of the parking support processing will be described with reference to the flowchart shown in FIG. 2. The parking support processing is mainly executed by the parking support operation control unit 42 and parking support screen generating unit 45 of the parking support control unit 40.

When the parking support processing is started, information acquisition processing is executed, first (step ST11). In the information acquisition processing, the parking support operation control unit 42 acquires the vehicle state information from the vehicle state detection control unit 41, the driver information from the driver identifying unit 23, and further the navigation operation state information, speed information, traveling azimuth information, position information and date and time information from the navigation basic operation control unit 50.

Next, it is checked whether in the parking support operation mode or not (step ST12). The information as to whether in the parking support operation mode or not is memorized by a parking support operation mode flag (not shown) in the parking support operation control unit 42. If a decision is made at step ST12 that it is not in the parking support operation mode, the normal operation is recognized as the current mode, and the parking support start decision processing is executed (step ST13). In the parking support start decision processing, a decision is made whether to start the parking support or not. Details of the parking support start decision processing will be described later.

Next, it is checkedwhether a parking support start condition ismetornot (step ST14). More specifically, it is checked whether the result of the parking support start decision processing at step ST13 indicates that the parking support start condition is met or not. If a decision is made at this step ST14 that the parking support start condition is met, the parking support mode flag is set (step ST15). Next, the parking support start processing is executed (step ST16). In the parking support start processing, the parking support operation is prepared. Details of the parking support start processing will be described later. After that, the sequence proceeds to step ST24.

If a decision is made at the foregoing step ST14 that the parking support start condition is not met, then it is checked whether the parking support setting operation is executed or not (step ST17). More specifically, the parking support operation control unit 42 checks whether or not the operation information sent from the operation control unit 30 indicates that the parking support setting operation is carried out using the hard keys 21 or touch keys 22. If a decision is made at this step ST17 that the parking support setting operation is not carried out, the sequence proceeds to step ST24.

On the other hand, if a decision is made at step ST17 that the parking support setting operation is carried out, then the parking support setting processing is executed (step ST18). In the parking support setting processing, various operation conditions of the parking support are set in response to the user operation. Details of the parking support setting processing will be described later. After that, the sequence proceeds to step ST24.

If a decision is made at the foregoing step ST12 that it is in the parking support operation mode, it is recognized that the parking support continues, and the parking support end decision processing is executed (step ST19). In the parking support end decision processing, a decision is made whether to terminate the parking support or not. Details of the parking support end decision processing will be described later. Next, it is checked whether a parking support end condition is met or not (step ST20). More specifically, it is checked whether the result of the parking support end decision processing at step ST19 indicates that the parking support end condition is met or not.

If a decision is made at this step ST20 that the parking support end condition is met, the parking support mode flag is cleared (step ST21). Next, the parking support end processing is executed (step ST22). In the parking support end processing, processing of terminating the parking support operation is executed. Details of the parking support end processing will be described later. After that, the parking support processing ends.

If a decision is made at the foregoing step ST20 that the parking support end condition is not met, then the parking support operation processing is executed (step ST23). Details of the parking support operation processing will be described later. After that, the sequence proceeds to step ST24.

At step ST24, information output processing is executed. In the information output processing, the parking support operation control unit 42 generates various information to be output. The various information includes the camera image control information, parking support operation state information, parking support control data and parking support screen data.

Next, parking support screen generating processing is executed (step ST25). More specifically, the parking support screen generating unit 45 generates a parking support screen from the various control information generated by preprocessing, and sends it to the navigation screen display control unit 57 of the navigation basic operation control unit 50. The navigation screen display control unit 57 carries out switching between the navigation display screen and parking support screen. This will cause the display unit 25 to display the navigation display screen or parking support screen.

Next, parking support voice generating processing is executed (step ST26). More specifically, the parking support screen generating unit 45 generates the parking support guide voice information from the various control information generated by the preprocessing, and sends it to the guide voice control unit 58 of the navigation basic operation control unit 50. The guide voice control unit 58 carries out switching between the guide voice and parking support voice. This will cause the voice output unit 26 to output the guide voice or parking support voice. After that, the sequence returns to step ST12 to repeat the foregoing processing.

Next, the parking support setting processing executed at step ST18 of the parking support processing shown in FIG. 2 will be described. In the parking support setting processing, settings are made for causing the parking support apparatus to execute a desired operation. To utilize the functions of the parking support apparatus, a user needs to set operation expected for each point (parking support operation for each point) in advance. The navigation system has a function of retaining a specified point as a registered place and of utilizing the destination setting at a route search. When storing the registered place, it is possible to edit and add detailed data (name, point mark or telephone number) other than the point in the registered place.

In the parking support setting processing, the setting of the parking support operation for each point is carried out by adding data for the parking support operation to the detailed data. As for the setting of the following basic set items, the navigation basic operation control unit 50 executes it, and the parking support operation control unit 42 acquires the data set by the navigation basic operation control unit 50 as the registered place setting information, and stores it in the parking support database 47.

A concrete example of setting relating to the parking support operation (display of the parking support image and output of the guide voice) when the navigation system executes the point registration will be shown below.

### <BASIC SETTING ITEMS>

### (1-1) Presence/Absence of Parking Lot Setting.

Set the presence or absence of the parking lot setting to a registered place. Only when the parking lot setting is present, the following settings are effective. If the parking lot setting is absent, the following setting cannot be performed.

### (1-2) Setting of Parking Mode.

Set a parking mode, that is, set the parallel parking (back), parallel parking (forward), roadside parking (pulling over to the left) or roadside parking (pulling over to the right). Setting the parking mode enables automatic setting of general-purpose parking support image and guide voice suitable for the parking mode.

### (1-3) Setting of Parking Support Image.

A parking support image is an image obtained by superposing a guide image (vehicle guidance frame, message and the like) upon a picked-up image (image of the surrounding area of the vehicle taken with a camera). In the "Setting of Parking Support Image", either a general-purpose image adjusted to the parking mode set by the "Setting of Parking Mode" or a special-purpose image a user sets individually is selected. As a general-purpose image, an image that has been conventionally used can be employed. A special-purpose image can be selected from a plurality of candidates the user has edited/registered in advance. Details of the special-purpose image will be described later.

### (1-4) Setting of Guide Voice.

Either a general-purpose voice adjusted to the parking mode set in the "Setting of Parking Mode" or a special-purpose voice a user sets individually is selected. As a general-purpose voice, a voice that has been conventionally used can be employed. A special-purpose voice can be selected from a plurality of candidates the user has edited/registered in advance. Details of the special-purpose voice will be described later.

### (1-5) Driver Designation.

Designate a driver to whom the set contents are applied (individual or common). According to the driver designation, the operation is switched to the one suitable for the driver.

### (1-6) Parking Support Start Condition.

Set a manual operation (started using a switching button) or automatic operation (started automatically when prescribed conditions are met). Here, the prescribed conditions refer to conditions such as the distance from the registered place, a traveling direction, a day of the week, a period of time, a shift lever position or turning on of hazard lights. The parking support start condition is structured in such a manner as tobe selected/set from a plurality of candidates. Details of the parking support start condition will be described later.

### (1-7) Parking Support End Condition.

Set a manual operation (terminated using the switching button) or automatic operation (terminated automatically when prescribed conditions are met). The parking support end condition is structured in such a manner as to be selected/set from a plurality of candidates.

### (1-8) The Others.

Set items of "the others" are optional. Set the presence or absence of the icon display indicating that the parking lot setting is present. In addition, set whether to display an automatic operation switching range on the map or not.

### <SET ITEMS>

In addition, the following settings are made as a screen to be displayed at parking.

### (2-1) Driver Condition Setting.

All, Driver A, Driver B, ···.

### (2-2) Position Condition Setting.

Select from the present position, registered place or the like.

### (2-3) Set Display Start Condition of Screen for Parking.

Start automatically when entering an area B from the outside of an area A designated (area A ≠ area B); Display a button when located within an area designated and start in response to a user operation; or Start when the shift lever is set at reverse.

### (2-4) Set Display Image Pattern of Screen for Parking.

### ·Types of Cameras To Be Used.

Using only the rearview camera 17 (for back-in parking), only the side cameras 16, only the front camera 15 (for head-in parking), a combination of two cameras (rearview camera 17 + side cameras 16, rearview camera 17 + front camera 15, side cameras 16 + front camera 15), or a combination of three cameras.

### ·Display Area of Camera Image To Be Used, Rate of Enlargement/Reduction and Display Position.

### (2-5) Set Display Guideline Pattern.

### ·Selection of Guideline Type.

Figure (selection from fixed form guideline candidates or selection of a guideline created by a user) or capture image (selection from image candidates or selection of a display method).

### ·Positioning of Guideline

Adjust display position of a guideline (top or bottom, left or right, and rotation).

### ·Set Display Condition of Guideline.

### (2-6) Set Evaluation of Parking in Garage.

### ·Make an evaluation or not.

### ·Evaluation conditions (time, number of quick turns of the wheel, parking position).

Next, details of a special-purpose image a user sets individually in the foregoing "(1-3) Setting of Parking Support Image", that is, details of editing/setting the special-purpose parking support image (picked-up image and guide image) will be described.

### (3-1) Setting of Picked-Up Image.

The term "picked-up images" refer to images (videos) shot with a plurality of cameras mounted on the vehicle. Since types of appropriate picked-up images (image from the front camera 15, images from the side cameras 16 or the image from the rearview camera 17) differ depending on a parking location and parking mode, the "Setting of Picked-Up Image" carries out selection/setting of an image to be used. Incidentally, as for the number of picked-up images to be used, it can be one or more. When using a plurality of picked-up images, the screen is divided into a plurality of areas, each of which displays a single picked-up image.

In addition, in the "Setting of Picked-Up Image", settings of the display area of a picked-up image, rate of enlargement/reduction, correction method, display position on the screen and setting of the display size or display shape are made besides the type of the picked-up image. The term "display area of a picked-up image" refers to an area which is cut out of the input picked-up image and displayed as necessary. The term "rate of enlargement/reduction of a picked-up image" refers to magnification determined when an input picked-up image is enlarged or reduced. The term "correction method of a picked-up image" refers to various correction methods in the image processing such as distortion correction of an image, white balance adjustment, contrast adjustment and edge emphasis. The term "display position on the screen" refers to the display position of a picked-up image on the screen (in the case of a plurality of images, positions of individual images). The term "display size on the screen" refers to the size of a picked-up image to be displayed (in the case of a plurality of images, sizes of individual images). The term "display shape on the screen" refers to a shape when displaying a picked-up image (in the case of a plurality of images, shapes of the individual picked-up images). As an example of the display shape, a square, rectangle or circle can be used.

In addition, in the "Setting of Picked-Up Image", if an overlap occurs when displaying a plurality of picked-up images, setting of display order (front or back) is made. Incidentally, image processing can integrate a plurality of picked-up images into a single image (conversion into a multiview image that enables viewing all the surroundings of the vehicle). In addition, since setting all the items from the beginning is difficult, a configuration is also possible which prepares a plurality of recommended patterns that will become a model in accordance with the parking mode, causes a user to select one of the recommended patterns and then to edit and set each.

### (3-2) Setting of Guide Image.

The term "guide image" refers to an image that helps the user's parking operation by being superposed on a picked-up image, such as a vehicle guidance frame, expected route of the vehicle and various messages. Since the type, shape, display position and the content of message of an appropriate guide image differ depending on the type of the picked-up image or on the parking space, the "Setting of Guide Image" performs selection/setting of an image to be used. Here, the term "vehicle guidance frame" refers to a frame indicating the target position at parking, and the vehicle guidance frame suitable for the parking space is selected/edited or created from candidates. The term "expected route of the vehicle" refers to a line that displays an estimated route of the vehicle in accordance with the information about the steering angle of the wheel. It can be automatically generated according to the vehicle and the type of a picked-up image, and the selection/setting of the presence or absence of display and contents (color or type of the line) is carried out. The term "various messages" refers to a warning accompanying the wheel operation guidance or detection of an obstacle, and is displayed in a text or figure.

In addition, the "Setting of Guide Image" carries out selection/setting of display contents, that is, what contents are to be displayed in what conditions. Like the picked-up image, since it is difficult to set all the items from the beginning, a configuration is possible which prepares a plurality of recommended patterns to be used as a model in accordance with the picked-up image. In this case, the user selects one of the recommended patterns and performs editing/setting of each.

The setting of the foregoing picked-up image and guide image is executed on the navigation system. Incidentally, a configuration is also possible which causes the navigation system to capture the data the user edited as to shapes or colors using a personal computer and to register the data in the parking support database 47 to be used. The configuration enables displaying an appropriate guideline in accordance with a parking space or model of the car. Furthermore, a configuration is also possible which registers texts in the parking support database 47 to be used. According to the configuration, it can display a warning message indicating a black spot at parking such as "Take care of a left-side pole".

In addition, when editing with equipment other than the navigation system such as a personal computer, a configuration is also possible which provides the navigation system with an additional function of recording parking operation, causes the navigation system to store various information (such as picked-up images, steering angles of the wheel or position information) at the parking operation in a designated space in the parking support database 47 and to store the information in a portable storage medium, and causes the personal computer to read the contents of the storage medium for the user to edit them.

Incidentally, a configuration is possible which registers a captured image (referred to as capture image) in the parking support database 47 as a guide image, and which displays the capture image as a standard. According to the configuration, it can display the standard parking position in an overlay (superposing) display or double-screen display. In addition, a configuration is possible which uses a technique such as image recognition and displays a warning message when the image has a large difference from the standard. According to the configuration, when it records images at individual stages from the start to the end of parking, it can display appropriate guide images at various timing at parking.

In addition, a configuration is also possible which alters a guideline to be displayed in accordance with a driver. More specifically, a configuration is possible which causes the parking support screen generating unit 45 to acquire a guideline from the parking support database 47 according to the driver identified by the driver identifying unit 23, and to generate a parking support screen by superposing it upon an image obtained by shooting with the front camera 15, side cameras 16 or rearview camera 17. According to the configuration, since the parking position will vary from driver to driver, it can alter the guideline for each driver.

Next, details of a special-purpose voice a user sets individually in the foregoing "(1-4) Setting of Guide Voice", that is, details of editing/setting of the special-purpose guide voice will be described. The term "guide voice" refers to a voice that helps the parking operation of a user. Since the type of the appropriate guide voice will vary depending on a parking space, selection/setting of the voice to be used is made. At the setting, a configuration is possible which selects one of the plurality of recommended patterns or selects voice data the user recorded. In addition, in the "Setting of Guide Voice", timing of starting the voice guidance is set.

As for the setting of the guide voice, the navigation system can carry it out. Incidentally, a configuration is also possible which causes the navigation system to capture data edited by a personal computer or the like. In addition, a configuration is possible which sets the guide voice together with the setting of the foregoing parking support image. In this case, a configuration, which displays the parking operation in a schematic diagram, and which enables a user to set a position and type for playing the guide voice back, will facilitate the setting operation.

Next, details of the parking support start condition set at the foregoing "(1-6) Parking Support Start Condition" will be described. The term "Parking Support Start Condition" refers to a condition for switching from a normal navigation screen display to a parking support screen display (or ending the parking support screen). The switching of the parking support screen is roughly divided into two categories: manual operation and automatic operation.

### (4-1) Setting to Manual Operation.

In the state where the manual operation is set, the parking support image that is set is displayed only when the switching button is pushed. When using a button displayed on the screen as the switching button without using the hard keys 21, the switching button will be obstructive if it is displayed continuously. Accordingly, to display the switching button on the screen only when necessary, a configuration is possible which sets a display condition of the switching button in the same condition that is set in the automatic operation as described below. This will cause the switching button to be displayed only when the condition is met. In this case, when the switching button is not displayed, a configuration is also possible which enables the parking support operation according to the manual operation by pushing any key a plurality of times.

### (4-2) Setting to Automatic Operation.

In the state where the automatic operation is set, when the conditions the user set in advance are met (when a decision is made that parking will be started from now), switching is automatically made to the parking support mode and the screen is switched to the parking support screen. As the conditions, a plurality of conditions can be set and a combination of the conditions can be used as well as a single condition.

Setting examples of the conditions are shown below.
· Distance from a registered place: Set a distance condition from the vehicle to the registered place (100 m, for example).
· Traveling direction: Set a direction in which the vehicle travels (northward, for example).
· A day of the week: Set a day of the week to be displayed (from Monday to Friday, for example).
· A period of time: Set a period of time to be displayed (from seven to nine o'clock, for example).
· Shift lever position: Set the state of the shift lever position (reverse, for example)
· Hazard lights: Set a hazard light lighting state (hazard lighting start, for example)

A concrete setting example: Setting can be made such as "switching to the parking support mode when the vehicle enters an area within 10 m from a registered place (a parking lot of the company) in the northward direction from seven to nine o'clock from Monday to Friday".

### (4-3) The Others.

As other set contents, even when the manual operation is set, if the picked-up image and a past picked-up image stored previously have a distinct difference, a configuration is also possible which decides that an obstacle or the like is present, and which has an additional function of automatically switching to the parking support operation to call driver's attention.

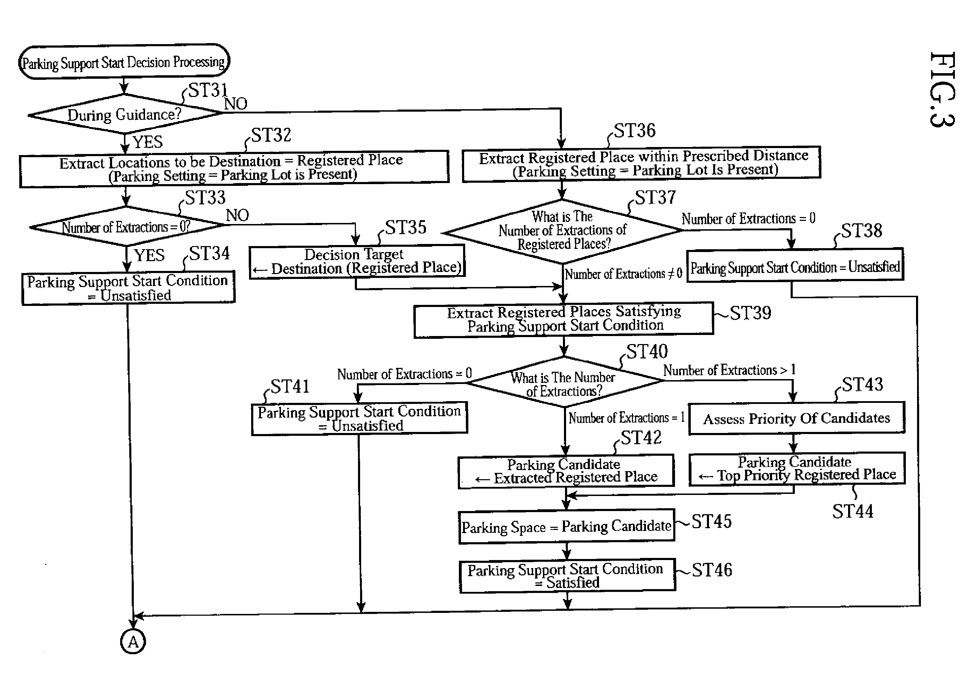

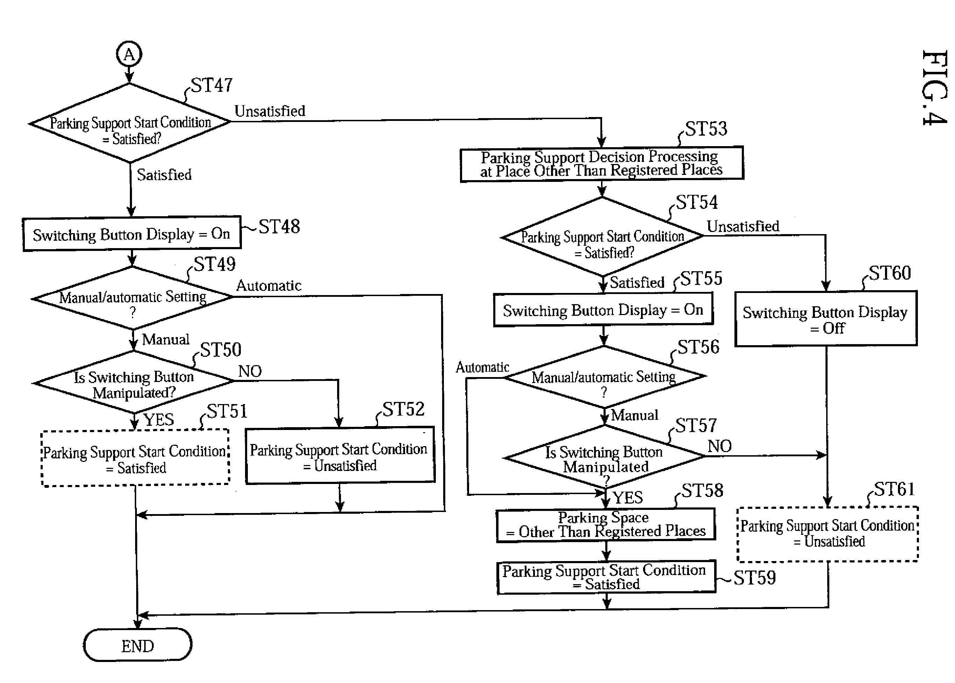

Next, details of the parking support start decision processing executed at step ST13 of the parking support processing shown in FIG. 2 will be described with reference to flowcharts shown in FIG. 3 and FIG. 4. As for the start of the parking support, there are two cases of being carried out: "manual operation" and "automatic operation" as described above. In the "automatic operation", it is enough to use the decision result in postprocessing by placing "parking support start condition = unsatisfied or satisfied". On the other hand, in the "manual operation", the button operation must be decided further to determine that the "parking support start condition = unsatisfied or satisfied". Furthermore, when parking in a space other than the registered place, there are some cases where the parking support operation is necessary, in which case a decision of parking in a space other than the registered place is made when "parking support start condition = unsatisfied". Details will be described with reference to the flowcharts of FIG. 3 and FIG. 4.

In the parking support start decision processing, it is checked whether guidance is under way or not (step ST31). More specifically, a destination is set, and it is checked whether route guidance is being carried out or not. If a decision is made at this step ST31 that the guidance is under way, a place where the destination is a registered place (parking lot setting = parking lot is present) is extracted (step ST32). Next, it is checked whether the number of extraction at step ST32 is "0" or not (step ST33) . If a decision is made at this step ST33 that the number of extraction is "0", a decision is made that the parking support start condition is unsatisfied (step ST34). After that, the sequence proceeds to step ST47. On the other hand, if a decision is made at this step ST33 that the number of extraction is not "0", the destination (registered place) is made a decision target (step ST35). More specifically, only the registered place set as the destination is made a decision target. After that, the sequence proceeds to step ST39.

If a decision is made at the foregoing step ST31 that guidance is not under way, a registered place (parking lot setting = parking lot is present) within a prescribed distance from the vehicle is extracted to select a candidate from neighboring registered place information (step ST36). Incidentally, when a decision is made clearly that an eligible registered place (parking lot setting = parking lot is present) is passed intentionally, it is excluded from an extraction target until the vehicle approaches again.

Next, the number of extraction of registered places is checked (step ST37). If a decision is made at this step ST37 that the number of extraction of the registered places is nonzero, that is, that a registered place (parking lot setting = parking lot is present) is present, the sequence proceeds to step ST39. On the other hand, if a decision is made at this step ST37 that the number of extraction of the registered places is zero, that is, that no registered place (parking lot setting = parking lot is present) is present, a decision is made that the parking support start condition is unsatisfied (step ST38). After that, the sequence proceeds to step ST47.

At step ST39, a registered place where the parking support start condition is satisfied is extracted. Next, the number of extraction at step ST39 is checked (step ST40). If the number of extraction is "0" at this step ST40, that is, if no registered place is present where the parking support start condition is satisfied, a decision is made that the parking support start condition is unsatisfied (step ST41). After that, the sequence proceeds to step ST47.

If the number of extraction is "1" at the foregoing step ST40, that is, if only one registered place is present where the parking support start condition is satisfied, the extracted registered place is made a parking candidate (step ST42). After that, the sequence proceeds to step ST45.

If the number of extraction at the foregoing step ST40 is greater than "1", that is, if a plurality of registered places are present where the parking support start condition is satisfied, priority evaluation of candidates is executed (step ST43). More specifically, a decision of the priority order of the registered places is made. As for the decision of the priority order, it is made according to a rule prescribed in advance such as in ascending order of the distance from the vehicle, in descending order of the frequency of use or in order of recent use. Next, the top priority registered place is selected as the parking candidate (step ST44). More specifically, as a result of the priority evaluation at step ST43, the highest priority registered place is selected as the candidate of the parking space. After that, the sequence proceeds to step ST45.

At step ST45, the parking candidate decided at step ST42 or step ST44 is made a parking space. Next, a decision is made that the parking support start condition is satisfied (step ST46). After that, the sequence proceeds to step ST47.

At step ST47, it is checked whether the parking support start condition is satisfied or not. If a decision is made at this step ST47 that the parking support start condition is satisfied, then the switching button display is turned on (step ST48). Incidentally, control of the actual switching button display is carried out by the foregoing parking support screen generating processing (see step ST25).

Next, it is checked which one of the manual operation and automatic operation is set (step ST49). If a decision is made at this step ST49 that the automatic operation is set, since the decision result of the parking support start carried out previously can be used without change, the parking support start decision processing is terminated. On the other hand, if a decision is made at this step ST49 that the manual operation is set, then it is checked whether the switching button is pushed or not (step ST50).

If a decision is made this step ST50 that the switching button is pushed, the parking support start decision processing is terminated while maintaining the decision that the parking support start condition is satisfied (step ST51). On the other hand, if a decision is made at this step ST50 that the switching button is not pushed, a decision is made that the parking support start condition is unsatisfied (step ST52). After that, the parking support start decision processing is terminated.

If a decision is made at the foregoing step ST47 that the parking support start condition is unsatisfied, it is recognized that it is a case of parking in a place other than a registered place (parking lot setting is present), then decision processing is executed as to a place other than the registered place as in a conventional example (step ST53). Next, it is checkedwhether the parking support start condition is satisfied or not (step ST54). If a decision is made at this step ST54 that the parking support start condition is unsatisfied, the switching button display is turned off (step ST60). After that, using the decision result of the parking support start carried out previously, the parking support start condition is placed unsatisfied (step ST61), and the parking support start decision processing is terminated.

If a decision is made at the foregoing step ST54 that the parking support start condition is satisfied, the switching button display is turned on (step ST55). Incidentally, the control of the actual switching button display is executed by the foregoing parking support screen generating processing (see step ST25). Next, it is checked which one of the manual operation and automatic operation is set (step ST56). If a decision is made at this step ST56, that the automatic operation is set, the sequence proceeds to step ST58.

On the other hand, if a decision is made at this step ST56 that the manual operation set, it is checked whether the switching button is pushed or not (step ST57). If a decision is made at this step ST57 that the switching button is not pushed, the parking support start decision processing is terminated while maintaining the decision that the parking support start condition is unsatisfied (step ST61). On the other hand, if a decision is made at this step ST57 that the switching button is pushed, the sequence proceeds to step ST58.

At step ST58, a place other than a registered place is made a parking space (step ST58). Next, a decision is made that the parking support start condition is satisfied (step ST59). After that, the parking support start decision processing is terminated.

Incidentally, although the foregoing description does not mention it, even if the parking support start condition is unsatisfied and the switching button is not displayed, manipulating any key a plurality of times enables parking support operation by manual operation. Manipulation of a key a plurality of times is detected by the navigation basic operation control unit 50, and the parking support operation control unit 42 is notified of the parking support start operation. In this case, if the parking support start condition is satisfied and the parking space is other than a registered place, the parking support operation is started.

Next, details of the parking support start processing executed at step ST16 of the parking support processing shown in FIG. 2 will be described. The parking support start processing is executed when the decision is made that the parking support start condition is satisfied in the foregoing parking support start decision processing. In the parking support start processing, preparation for parking support operation is executed based on the decision result. The term "preparation for the parking support operation" refers to initialization of variables or flags used for the control of the parking support operation. In addition, in the parking support start processing, processing is executed which selects from the parking support database 47 the parking support control data and parking support screen data/voice data, which are registered for each parking space according to the identified parking space, and which develops them in the memories within the parking support operation control unit 42 and parking support screen generating unit 45.

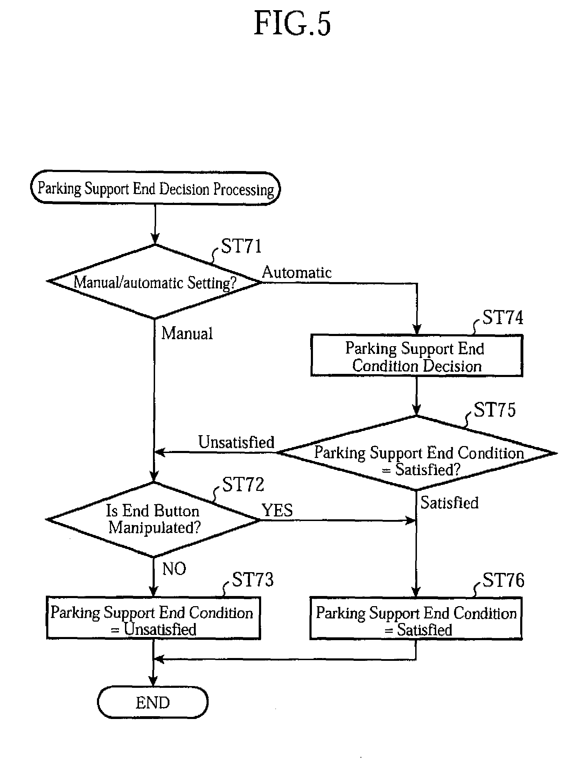

Next, details of the parking support end decision processing executed at step ST19 of the parking support processing shown in FIG. 2 will be described with reference to the flowchart shown in FIG. 5. In the parking support end decision processing, the end of the parking support is decided.

In the parking support end decision processing, it is checked which one of the manual operation and automatic operation is set, first (step ST71). If a decision is made at this step ST71 that the manual operation is set, then it is checked whether the end button is manipulated or not (step ST72). If a decision is made at this step ST72 that the end button is not manipulated, a decision is made that the parking support end condition is unsatisfied (step ST73). After that, the parking support end decision processing is terminated. On the other hand, if a decision is made at this step ST72 that the end button is manipulated, a decision is made that the parking support end condition is satisfied (step ST76). After that, the parking support end decision processing is terminated.

If a decision is made at the foregoing step ST71 that the automatic operation is set, then a parking support end condition decision is made (step ST74). As the parking support end condition, at least one of the conditions can be used whether the shift lever position is set at parking, the parking brake is in the on state, the vehicle parks at a prescribed space (decided by comparing with the position information or image), hazard lights are in the off state and the key is off.

Next, it is checked whether the parking support end condition is satisfied (step ST75). If a decision is made at this step ST75 that the parking support end condition is satisfied, the sequence proceeds to step ST76 at which a decision is made that the parking support end condition is satisfied, and then the parking support end decision processing is terminated. On the other hand, if a decision is made at this step ST75 that the parking support end condition is unsatisfied, the sequence moves to step ST72 at which the foregoing processing is executed. This will enable, even if the automatic operation is set, the manual operation to forcibly terminate.

Next, details of the parking support end processing executed at step ST22 of the parking support processing shown in FIG. 2 will be described. The parking support end processing is executed when a decision is made in the foregoing parking support end decision processing that the parking support end condition is satisfied. In the parking support end processing, processing that terminates the parking support operation is executed on the basis of the decision result. The term "end of the parking support operation" refers to the processing that completes the parking support operation and returns to the original control (control of the navigation functions). In addition, in the parking support end processing, processing is executed which creates data from the result of the parking operation and stores the data in the parking support database 47.

Next, details of the parking support operation processing executed at step ST23 of the parking support processing shown in FIG. 2 will be described. The parking support operation processing makes various decisions for generating appropriate parking support images and guide voices at respective stages of the parking operation. Details of the parking support operation processing will be described below using concrete examples of the parking operation.

### (5-1) Parallel Parking (Back).

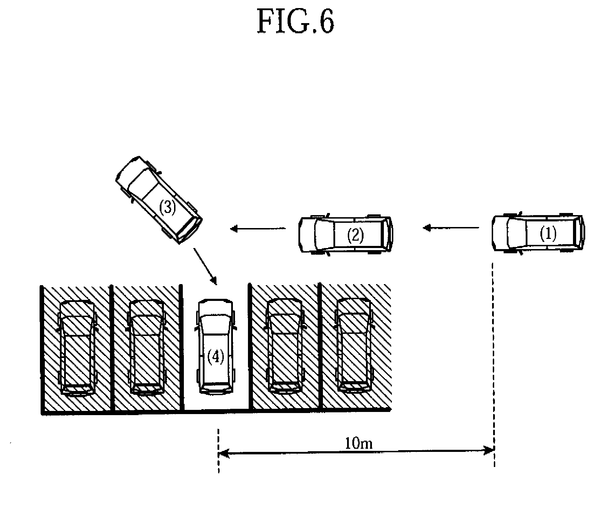

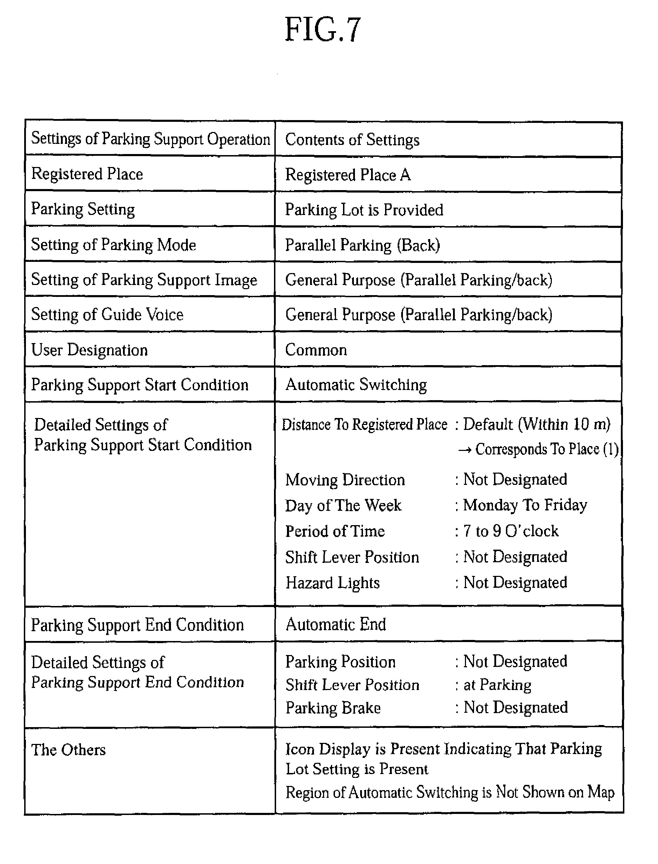

First, an example will be described which carries out parallel parking (back) in a parking lot set as a registered place. FIG. 6 shows an image of a parking process, and FIG. 7 shows set contents of the parking support operation at a relevant registered place. The parking mode at a registered place A is parallel parking (back), and there are obstacles (vehicles) on the left and right of the parking space.

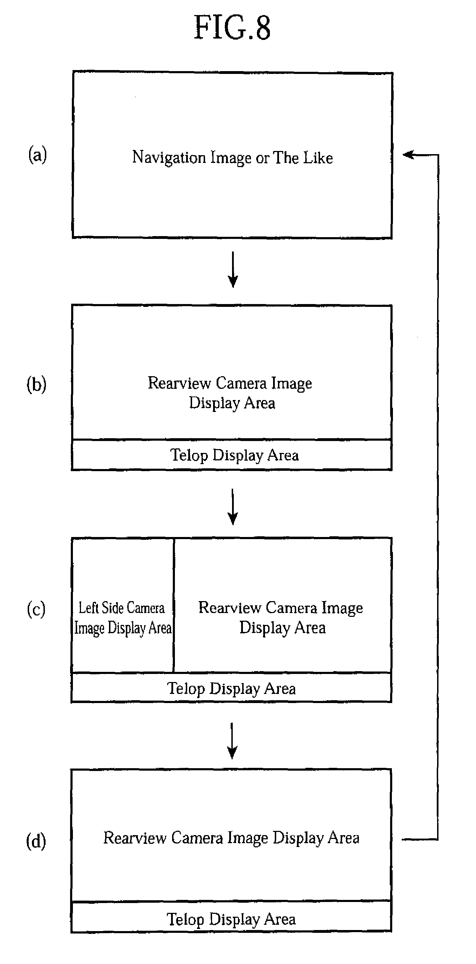

When parking, the vehicle enters from the direction (1), moves forward to the position (3), makes a temporary stop, and parks in the position (4) in reverse. Before the vehicle reaches the point (1), a navigation image as shown in FIG. 8 (a) is displayed on the display unit 25. When the vehicle approaches the point (1), if it is seven to nine o'clock on Monday to Friday, a decision of "parking support start condition is satisfied" is made in the parking support start decision processing and the parking support operation is started. Then after guidance is given using a telop display and voice informing of the start of the parking support, switching is made automatically to the parking support mode.

While moving (1)→(2)→(3), since it is necessary to pay attention to a vehicle behind, an image of the rearview camera 17 is displayed on the screen of the display unit 25 as shown in FIG. 8 (b). In this case, a telop for calling driver' s attention to a vehicle behind is displayed (a configuration is also possible which gives guidance using a voice at the same time). In addition, a configuration is also possible which gives guidance using a display and voice of warning that a vehicle comes near when an image recognition device or the like can automatically detect the approach of the vehicle behind.

After moving to the position (3), at the timing when the shift lever position is changed from drive to reverse, switching is made to the following operation. While reversing to (4), during the time the vehicle moves into the parking position obliquely, images of the rearview camera 17 and side camera (left side camera) 16 are displayed as shown in FIG. 8(c). In this case, a configuration is also possible which employs the side camera (right side camera) 16 for monitoring approach of a vehicle from a right direction. In addition, when the foregoing image recognition device is provided, a configuration is possible which makes a decision using an image of the right side camera and gives warning when detecting the approach of a vehicle.

In addition, a configuration is possible which gives, if the obstacle sensor 13 detects an obstacle, guidance using a display and voice of warning indicating that. At a point of time when the vehicle starts entering the parking position straightly, only the image of the rearview camera 17 is displayed as shown in FIG. 8(d). When arriving at (4) and the shift lever position is placed at parking, the parking support mode ends automatically. At this point of time, the display on the screen of the display unit 25 returns to the display shown in FIG. 8(a).

### (5-2) Parallel Parking (Forward).

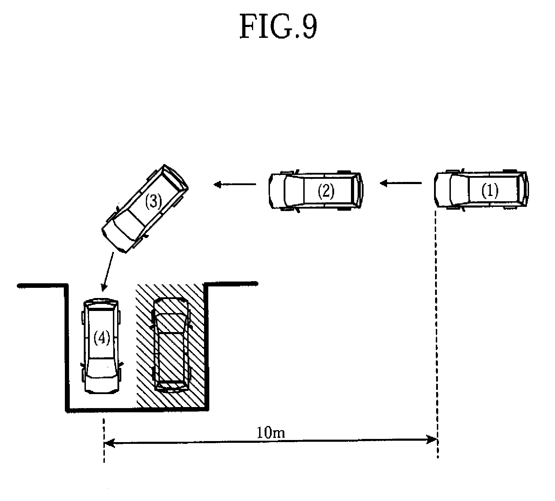

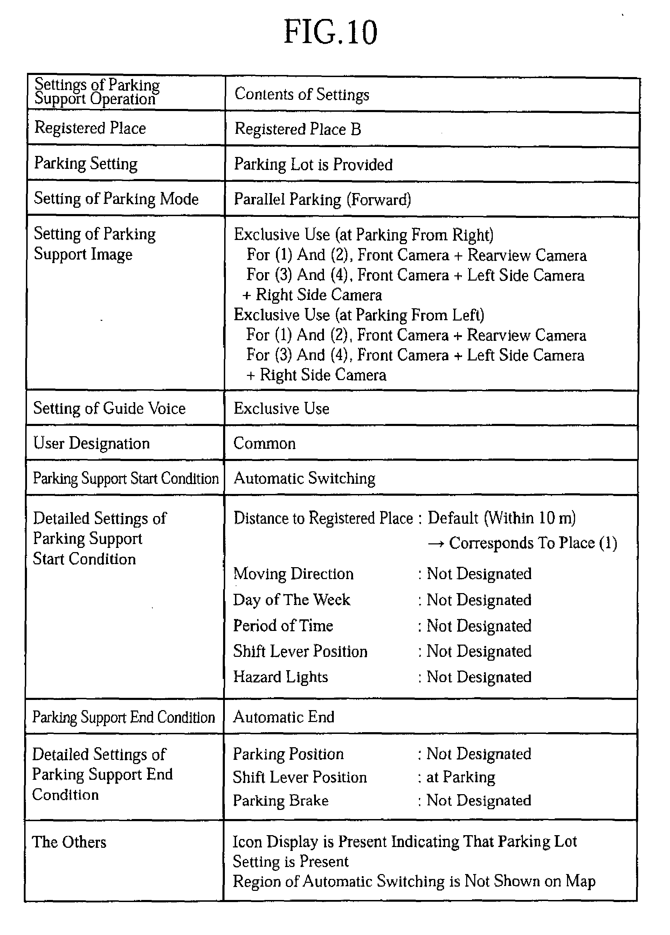

Next, an example will be described which carries out parallel parking (forward) in a parking lot set as a registered place. FIG. 9 shows an image of a parking process, and FIG. 10 shows set contents of the parking support operation at a relevant registered place. The parking mode of a registered place B is parallel parking (forward), and there is a wall on the right side and a vehicle on the left side as obstacles.

When parking, the vehicle enters from the direction (1), moves forward to the position (3), and parks in the position (4) by continuing forward movement. When the vehicle approaches the point (1), a decision of "parking support start condition is satisfied" is made in the parking support start decision processing and the parking support operation is started. Then after guidance is given using a telop display and voice informing of the start of the parking support, switching is made automatically to the parking support mode.

While moving (1)→(2)→(3), since it is necessary to pay attention to vehicles ahead and behind, an image of the front camera 15 and an image of the rearview camera 17 are displayed on the screen of the display unit 25. In this case, a telop for calling driver's attention to a vehicle behind is displayed (a configuration is also possible which gives guidance using a voice at the same time). In addition, a configuration is also possible which gives guidance using a display and voice of warning that a vehicle comes near when the image recognition device or the like can automatically detect the approach of the vehicle behind.

After moving to the position (3), at the timing when the steering wheel is turned sharply to the left, switching is made to the following operation. While driving forward to (4), during the time the vehicle moves into the parking position obliquely, images of the front camera 15 and both the left and right side cameras 16 are displayed.

In addition, a configuration is possible which gives, if the obstacle sensor 13 detects an obstacle, guidance using a display and voice of warning indicating that. At a point of time when the vehicle starts entering the parking position straightly, only the image of the front camera 15 is displayed. When arriving at (4) and the shift lever position is placed at parking, the parking support mode ends automatically.

### (5-3) Roadside Parking (Forward)

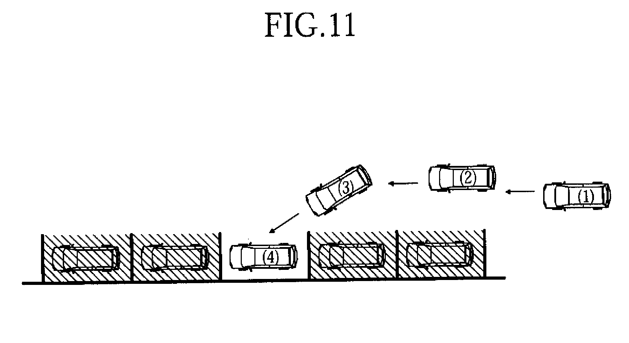

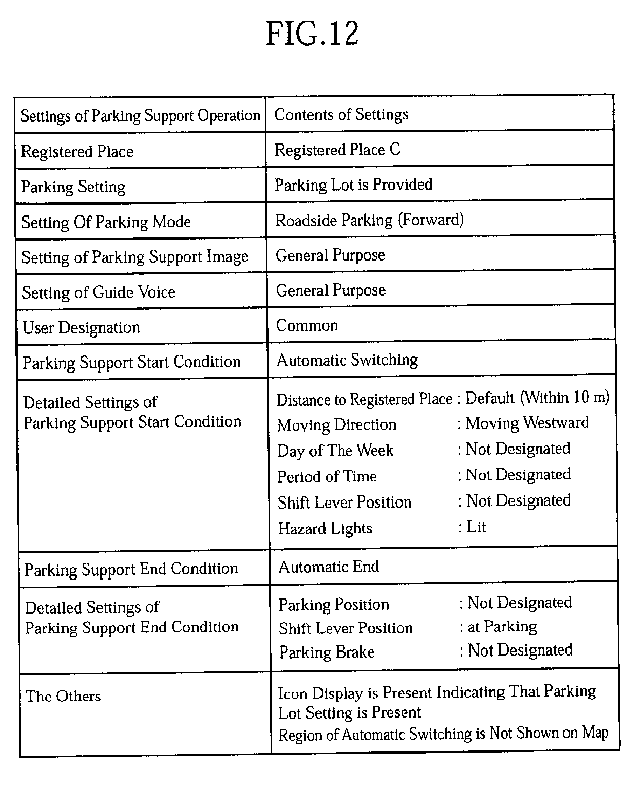

Next, an example will be described which carries out roadside parking (forward) in a parking lot set as a registered place. FIG. 11 shows an image of a parking process, and FIG. 12 shows set contents of the parking support operation at a relevant registered place. The parking mode of a registered place C is roadside parking (forward), and there are vehicles in front and behind as obstacles.

When parking, the vehicle enters from the direction (1), moves forward to the position (3), and then parks in the position (4) while moving forward. When the vehicle approaches the point (1), if the moving direction is westward and the hazard lights are lit, a decision of "parking support start condition is satisfied" is made in the parking support start decision processing and the parking support operation is started. Then after guidance is given using a telop display and voice informing of the start of the parking support, switching is made automatically to the parking support mode.

While moving (1)→(2)→(3), since it is necessary to pay attention to vehicles ahead and behind, an image of the front camera 15 and an image of the rearview camera 17 are displayed on the screen of the display unit 25. In this case, a telop for calling driver's attention to a vehicle behind is displayed (a configuration is also possible which gives guidance using a voice at the same time). In addition, a configuration is also possible which gives guidance using a display and voice of warning that a vehicle comes near when the image recognition device or the like can automatically detect the approach of the vehicle behind.

After moving to the position (3), at the timing when the steering wheel is turned sharply to the left, switching is made to the following operation. While driving forward to (4), during the time the vehicle moves into the parking position obliquely, images of the front camera 15 and both the left and right side cameras 16 are displayed.

In addition, a configuration is possible which gives, if the obstacle sensor 13 detects an obstacle, guidance using a display and voice of warning indicating that. At a point of time when the vehicle starts entering the parking position straightly, only the image of the front camera 15 is displayed. When arriving at (4) and the shift lever position is placed at parking, the parking support mode ends automatically.

### (5-4) Roadside Parking (Back)

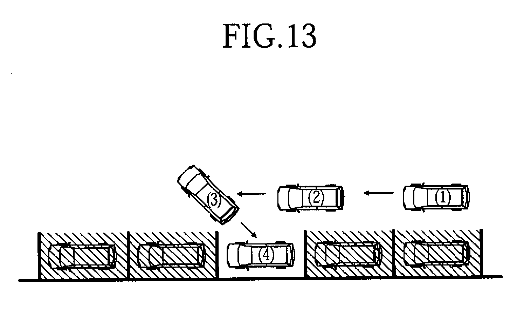

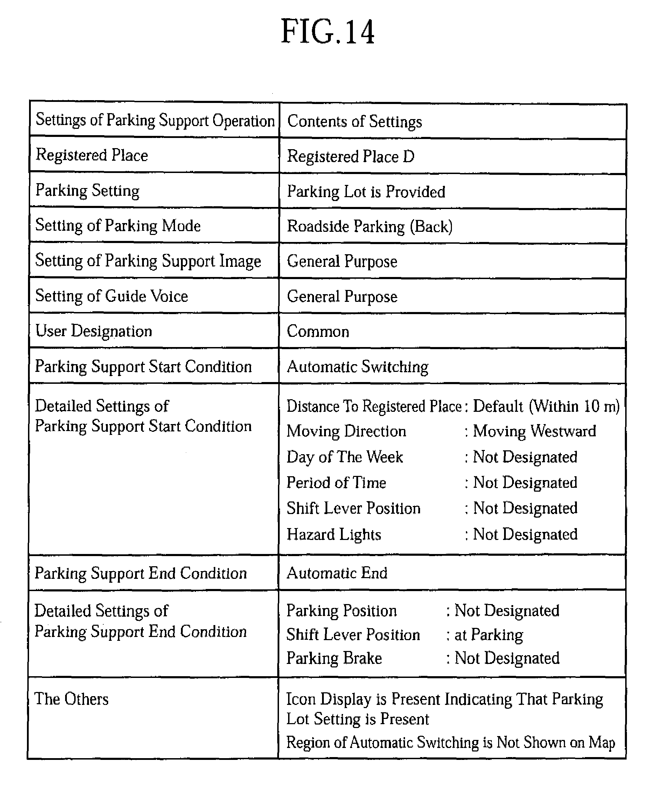

Next, an example will be described which carries out roadside parking (back) in a parking lot set as a registered place. FIG. 13 shows an image of a parking process, and FIG. 14 shows set contents of the parking support operation at a relevant registered place. The parking mode of a registered place D is roadside parking (black), and there are obstacles (vehicles) in front and behind.

When parking, the vehicle enters from the direction (1), moves forward to the position (3), makes a temporary stop, and parks in the position (4) in reverse. When the vehicle approaches the point (1), if the moving direction is westward, a decision of "parking support start condition is satisfied" is made in the parking support start decision processing and the parking support operation is started. Then after guidance is given using a telop display and voice informing of the start of the parking support, switching is made automatically to the parking support mode.

While moving (1)→(2)→(3), since it is necessary to pay attention to a vehicle behind, an image of the rearview camera 17 is displayed on the screen of the display unit 25. In this case, a telop for calling driver's attention to a vehicle behind is displayed (a configuration is also possible which gives guidance using a voice at the same time). In addition, a configuration is also possible which gives guidance using a display and voice of warning that a vehicle comes near when an image recognition device or the like can automatically detect the approach of the vehicle behind.

After moving to the position (3), at the timing when the shift lever position is changed from drive to reverse, switching is made to the following operation. While reversing to (4), during the time the vehicle moves into the parking position obliquely, images of the rearview camera 17 and side camera (left side camera) 16 are displayed. In this case, a configuration is also possible which employs the side camera (right side camera) 16 formonitoring approach of a vehicle from a right direction. In addition, when the foregoing image recognition device is provided, a configuration is possible which makes a decision using an image of the right side camera and gives warning when detecting the approach of a vehicle.

In addition, a configuration is possible which gives, if the obstacle sensor 13 detects an obstacle, guidance using a display and voice of warning indicating that. When arriving at (4) and the shift lever position is placed at parking, the parking support mode ends automatically.

As described above, according to the parking support apparatus of the embodiment 1 in accordance with the present invention, since it is configured in such amanner that it registers for each parking space a guideline to be displayed at parking in the parking support database 47, acquires the guideline corresponding to the parking space from the parking support database 47 when parking in a parking space, and generates and displays a parking support screen by superposing the guideline on an image or images taken with the front camera 15, side cameras 16 and/or rearview camera 17, it can improve the convenience by displaying the optimum parking support image corresponding to the parking space.

Incidentally, the foregoing parking support apparatus can be configured in such a manner as to show a grade (comment) of parking in a garage. More specifically, it can be configured in such a manner as to display the difference from the optimum parking position, the time taken for the parking in a garage, the number of quick turns of the wheels and the like, and to show a comment such as a general assessment.

In addition, a configuration is also possible which adjusts a camera image in accordance with a parking space. More specifically, since a position a driver wants to view will vary depending on a parking space, a configuration is possible which alters the image processing such as cutting, enlargement and reduction depending on the parking space. In addition, a configuration is possible which switches the camera (front camera 15, side cameras 16 or rearview camera 17) to be used according to a parking space. Furthermore, a configuration is also possible which can change a division ratio on screen depending on a parking space.

### INDUSTRIAL APPLICABILITY

The present invention is applicable to a parking support apparatus which is requested to display the optimum parking support image and to output a guide voice in accordance with a parking space or driver.

## Claims

1. A parking support apparatus comprising:
a vehicle position locating control unit for locating a present position;
a parking support database in which a guideline to be displayed at parking is registered for each parking space;
cameras for shooting surroundings;
a parking support screen generating unit for acquiring, when parking in a parking space placed at the position located by the vehicle position locating control unit, the guideline corresponding to the parking space from the parking support database, and for generating a parking support screen by superposing the guideline upon an image or images taken with the cameras; and
a display unit for displaying the parking support screen created by the parking support screen generating unit.

2. The parking support apparatus according to claim 1, wherein
the parking support database records an image including at least one of a guideline and text edited externally.

3. The parking support apparatus according to claim 1, wherein
the parking support database records a capture image for each parking space; and
the parking support screen generating unit creates the parking support screen using a capture image acquired from the parking support database.

4. The parking support apparatus according to claim 1, further comprising:
a driver identifying unit for identifying a driver, wherein
the parking support screen generating unit creates the parking support screen by acquiring from the parking support database a guideline corresponding to the driver identified by the driver identifying unit, and by superposing the guideline on an image or images taken with the cameras.

5. The parking support apparatus according to claim 1, wherein
the parking support screen generating unit creates a comment showing a difference from an optimum parking position, time taken for parking in a garage, the number of quick turns of a steering wheel and a general assessment, and causes the display unit to display the comment.

6. The parking support apparatus according to claim 1, wherein
the parking support screen generating unit adjusts an image acquired by shooting with the cameras in accordance with a parking space.

7. The parking support apparatus according to claim 1, wherein
a display of the display unit is automatically switched to the parking support screen when a decision of parking is made and when a prescribed condition is satisfied.

8. The parking support apparatus according to claim 1, wherein
a parking space registered in the parking support database is shown on a screen of the display unit as an icon.
